Europäisches Patentamt

European Patent Office

Office européen des brevets

(19)

(11) Publication number: **0 425 291 A2**

# EUROPEAN PATENT APPLICATION

(12)

(21) Application number: 90311711.7

(22) Date of filing: 25.10.90

(51) Int. Cl.⁵: **G06K 9/72**

(30) Priority: 25.10.89 US 427147

(43) Date of publication of application:
**02.05.91 Bulletin 91/18**

(84) Designated Contracting States:
**DE FR GB**

(71) Applicant: **XEROX CORPORATION**
**Xerox Square**
**Rochester New York 14644(US)**

(72) Inventor: **Beran, James T.**
**2101 California Street, Apt. Nr. 104**
**Mountain View, CA 94040(US)**
Inventor: **Kaplan, Ronald M.**

**4015 Orme Street**
**Palo Alto, CA 94306(US)**
Inventor: **Wilcox, Lynn D.**
**45 Joaquin Road**
**Portola Valley, CA 94025(US)**
Inventor: **Halvorsen, Per-Kristian**
**11 Carriage Court**
**Los Altos, CA 94022(US)**

(74) Representative: **Weatherald, Keith Baynes et al**
**Rank Xerox Patent Department Albion House, 55 New Oxford Street**
**London WC1A 1BS(GB)**

(54) **Word recognition process and apparatus.**

㋧ A data structure includes data indicating a set of strings of character or phoneme candidate identifiers. Each identifier indicates a machine discriminatable candidate type, and the data are accessible to determine whether a string of candidate identifiers is in the set. To produce the data structure, the set of strings is obtained using a list of words. All possible strings up to a given length are obtained, and those that have a high probability of being one of the words are retained. Also, the words are expanded into strings by using probable candidate identifiers for each character or phoneme. If necessary, the number of candidate types is increased or decreased to obtain a satisfactory set of strings. The data structure can include information relating to each string in the set; for example, it can be a finite state transducer with data units, each including a candidate identifier and a character or phoneme identifier, so that the characters or phonemes of a word can be obtained from it. A processor receives a string of candidate identifiers from a candidate discriminator and searches the data structure for the identifiers that occur in the string. If a search succeeds, data relating to the matched string are obtained, such as a word it is likely to be or an identifier of the string. If the string is likely to be more than one word, one of the words is selected and its characters or ph,one,mes are provided as output. A system can include parallel recognition units, each with a respective data structure. The sets of strings can correspond to words with features such as' part of speech font speaker, a language, or a specialized vocabulary.

A results processor can receive the results from the recognition units and use them to obtain the characters or phonemes of a word that is likely to be the string being recognized.

Fig. 1

The present invention relates to the recognition of natural language text and speech. More specifically, the invention relates to the recognition of characters and phonemes.

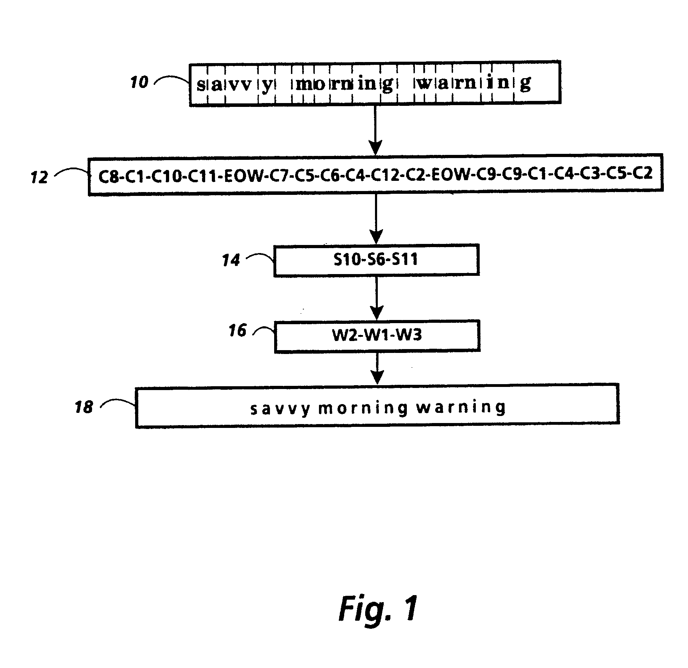

Goshtasby, A., and Ehrich, R. W., "Contextual Word Recognition Using Probabilistic Relaxation Labeling," Pattern Recognition , Vol. 21, No. 5, 1988, pp. 455-462, describe a contextual word recognition system, as shown in Fig. 1 of the article. A character recognizer module assigns to each input character 26 numbers showing the confidences that the character in the input has labels from *a* to *z*. The confidences are transformed to probabilities, and the output is a sequence of sets called substitution sets, each containing the alternatives for a particular character with nonzero probability. A post-processor identifies the correct word from the sequence of substitution sets using contextual information from the language, and may use confusion probabilities of characters, transition probabilities of characters, a dictionary or any combination of these. Section 2 reviews the major post-processing techniques, including dictionary look-up on page 457. Section 2.4 describes the memory and time needed for dictionary look-up. Section 3 describes a relaxation labeling process.

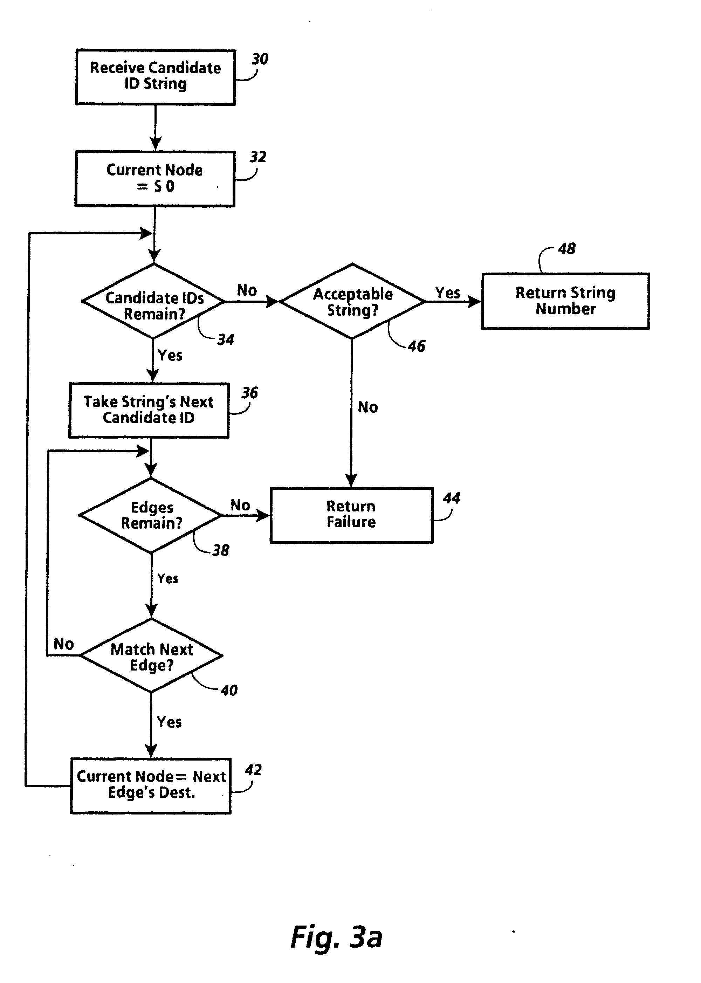

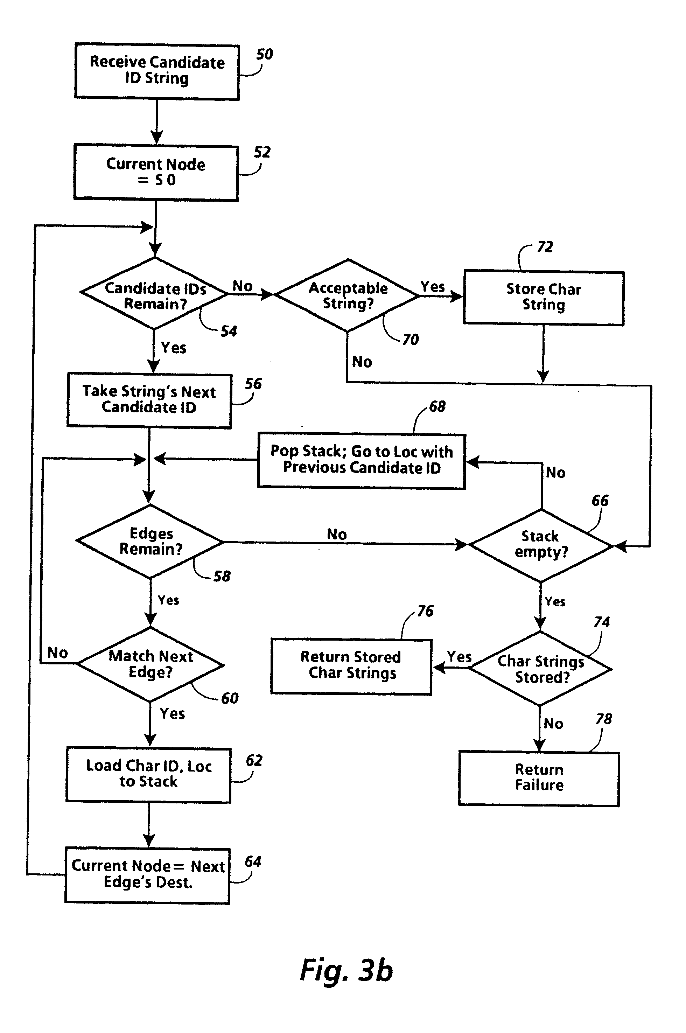

Sinha, R. M. K., and Prasada, B., "Visual Text Recognition Through Contextual Processing," Pattern Recognition , Vol. 21, No. 5, 1988, pp. 463-479, describe a two-pass contextual processing algorithm that corrects errors introduced by isolated optical character recognition (IOCR). Pages 463-464 describe past uses of contextual information in character and text recognition, including dictionary methods, which generally require larger storage and higher search times than Markov methods, and the use of a spelling checker. The first pass of the two-pass algorithm looks at words whose aliases generated by character substitutions based on confusion matrix lead to a valid dictionary entry, to obtain a graded confusion matrix for the majority font. The second pass uses the graded confusion matrix. Figure 1 shows the recognition process. Pages 465 and 467 describe a partial dictionary and a transient dictionary with words not in the partial dictionary and for which there are no aliases. Page 468 describes dictionary organization and search, including a binary tri-node structure as shown and described in relation to Figs. 3-5.

Shipman, D.W., and Zue, V.W., "Properties of Large Lexicons: Implications for Advanced Isolated Word Recognition Systems," Proceedings of ICASSP 82 , Vol. 1, IEEE, 1982, pp. 546-549, describe techniques for large-vocabulary, phonetically-based isolated word speech recognition. The database includes lexicons with a phonemic transcription for each word and the word's frequency of occurrence. Page 548 describes a preliminary crude phonetic analysis that can, for example, distinguish between consonants or vowels. Page 549 describes how lexicons of differing sizes were prepared by choosing a pronunciation of each word, including the phonemic form, the stress markers, and syllable boundaries. Page 547 also describes a six-way classification of phonemes. Pages 547-548 describe how a partial specification at the segmental level may determine a word uniquely, such as by reducing each word in the lexicon to a sequence of C-V patterns by replacing each consonant by the symbol C and each vowel by the symbol V; the authors imagine a crude preliminary phonetic analysis which distinguishes accurately between consonants and vowels, and further suggest that one approach to isolated word recognition for a large lexicon may be to classify the sound units initially into several broad categories, where the error in labeling is still small.

Bush, M.A. and Kopec, G.E., "Network-Based Connected Digit Recognition," IEEE Transactions on Acoustics, Speech and Signal Processing , Vol. ASSP-35, October, 1987, pp. 1401 -1413, describe speech recognition techniques that employ a pronunciation network whose branches correspond to meaningful acoustic-phonetic units. As explained in section I, recognizing an unknown utterance involves finding the best-scoring path through the pronunciation network. Section II describes the pronunciation networks, acoustic pattern matchers associated with the branches, and segment-based search algorithms for finding the path through a network. Fig. 1 shows an example of a pronunciation network that is a parallel connection of independent digit models that places no constraints on the order or number of recognized digits. Section III describes experiments using a connected digit system with two sets of matchers, trained respectively on male and female subsets, and Section III-J describes two networks, trained separately on men and women to recognize every input utterance.

Burton, D. K., Shore, J. E., and Buck, J. T., "Isolated-Word Speech Recognition Using Multisection Vector Quantization Codebooks," IEEE Transactions on Acoustics, Speech, and Signal Processing , Vol. ASSP-33, No. 4; August 1985, pp. 837-849, describe an approach to isolated-word speech recognition using vector quantization (VQ). Words are recognized using sequences of VQ codebooks, called multisection codebooks, described at page 839. Page 838 contrasts isolated-word recognition using a separate codebook for each word in the recognition vocabulary. In the new approach, a separate multisection codebook is designed for each word by dividing words into equal-length sections and designing a standard VQ codebook for each section with a clustering process. An unknown word is divided into sections, and VQ is performed on each section to find the multisection codebook that yields the smallest average distortion.

The present invention provides techniques for recognizing the characters of a written word, or the phonemes of a spoken word, by treating the word as a string of character or phoneme candidates. The techniques according to the invention provide data structures that can be used to recognize a data string and to provide additional information about a recognized string, such as the case or font of the words it is likely to be. A number of these data structures can be included in a system to provide parallel recognition operations.

One aspect of the invention results from noticing a basic problem in conventional techniques that perform recognition based on a string of probable character sets. The number of possible combinations of characters for each word increases rapidly as the number of characters in each set increases. Therefore, these techniques are practical only if the number of characters in each set is limited, a step that discards information about less probable characters and may therefore introduce errors.

Currently-available character recognition machines typically cannot discriminate among character types with complete accuracy, in part because of the wide variation in the shapes and sizes of characters within each character type that result from changes in case, font, and so forth. This aspect of the present invention results, however, from realizing that such machines can be treated as discriminating almost perfectly among a set of machine-discriminatable character candidate types. In other words, at some level, such machines respond identically to identical character candidates and have a finite number of distinct responses to character candidates. These distinct responses, which may be unique to a given machine, can therefore define a set of machine-discriminatable character candidate types.

This aspect results from further realizing that the problem of inaccurate character recognition can be solved in part by recognizing a string of character candidate identifiers, where each character candidate identifier indicates one of a set of machine-discriminatable character candidate types. The characters of a word with a high likelihood of being the recognized string can be provided as recognition output.

This solution can be implemented using a data structure that includes data indicating a set of strings of candidate identifiers, so that a processor can access the data structure and determine whether a candidate string is in the set. The set can include acceptable strings, each likely to be at least one acceptable word, and the data indicating the set can be a directed graph or other appropriate data structure.

This aspect of the invention is further advantageous because it provides a recognition technique that is relatively insensitive to errors in segmentation, a problem that can seriously affect conventional techniques. A given character candidate could be part of a character or could be a combination of more than one character. As long as a string of character candidates is in the set, it is recognizable even though one or more cf the candidates does not correspond to a single character.

Another advantage of this technique is that it does not require time-consuming calculation of numerous strings of characters that could correspond to a given sequence of character probabilities. Some conventional techniques calculate a number of probable strings of characters and look up each probable string in a dictionary in order to find those that are acceptable words. The technique of this invention, however, only requires that a single string of character candidate identifiers be looked up to determine whether it is in the set of acceptable strings.

A closely-related aspect of the invention results from realizing that the character candidate types that a machine discriminates between may not be those types that will allow optimal recognition. In other words, a machine may discriminate several forms from each other even though none of those forms has a significantly different character type probability vector from the others; conversely, a machine may fail to discriminate two forms that have significantly different character type probability vectors. Similarly, a machine may discriminate too many different character candidate types, resulting in an impractically large set of character candidate strings. Or a machine may discriminate character candidate types that are inappropriate for a given text.

These problems can be alleviated by allowing for modification of the set of character candidate types that the machine discriminates between, so that the data structure is based on the modified character candidate types. For example, if the machine discriminates by a clustering operation, it may be possible to split some clusters to increase the number of character candidate types and obtain finer discrimination, and other clusters can be lumped together to reduce the number of types and obtain coarser discrimination. Then, when the set of character candidate types has been modified, the modified set can be used to obtain the data structure for recognizing strings.

Another closely related aspect of the invention results from realizing that producing a data structure of the type described above depends on having a set of strings of candidate identifiers and that such a set of strings may be difficult to obtain. For example, it would be possible to obtain every possible string and then determine for each string whether it could be an instance of any words that might occur, but this would be extremely expensive computationally.

This problem can be solved to an extent by using a set or list of words in obtaining the set of strings. The word list can be used in at least two general ways, one of which obtains strings of candidate identifiers, then compares them with the word list, the other of which expands words in the word list to obtain candidate identifier strings.

The first general technique can be used for short lengths, such as two or three identifiers, for which it is feasible to obtain all possible candidate identifier strings. Each possible string can then be expanded into a set of most-probable character strings based on the character probabilities of the candidates. These character strings can be compared with the word list to determine whether the candidate identifier string from which they were obtained has a high probability of being one of the words. If so, the string is included in the set of candidate identifier strings.

The second general technique can be applied to expand each word in the word list. A word can be expanded using, for each character in the word, a few candidates that have both a high frequency of occurrence and a high probability of being that character. Pairs of characters that may be a single candidate, or a character that may be a pair of candidates, may be similarly expanded. Each string of candidate identifiers obtained in this manner is included in the set of strings. If there are words in the word list that include a character for which none of the candidates has a high frequency and a high probability, those words can be expanded using the candidates having the greatest combination of frequency of occurrence and probability of being that character. The candidate identifier strings obtained in this manner can be compared with each other to eliminate duplicates, keeping track of strings that can be instances of more than one word.

Another aspect of the invention is based on realizing that a data structure produced in this manner should provide information about words for which a given candidate identifier string has a high probability. One solution to this problem is to obtain a string identifier that can be used to retrieve information about a string's high-probability words. Another solution is to use a data structure that itself provides words when accessed with a string; such a data structure can be produced using finite state transducer techniques, data units in the data structure including a character candidate identifier and a character identifier. Yet another solution is to provide subsets of strings such that information about a string's high-probability words can be obtained based on which subset includes data indicating the string. The use of subsets of strings can also reduce data structure size and improve search speed, because each subset can be included in a separate data structure.

The recognition that it can be advantageous to use subsets of strings leads directly to further aspects of the invention. These aspects relate to the use of separate data structures for each of a number of subsets of an overall set of candidate identifier strings. These aspects are applicable not only to character candidate identifiers, but also to phoneme candidate identifiers for phoneme recognition in isolated words of speech.

The first of these further aspects provides string subsets each of which includes strings that are likely to be words with a respective word feature. For example, in character recognition, one subset can be for words with lower-case characters, another for words with upper-case characters, and another for words with an initial capitalized character. Separate subsets can be provided for different typefaces or for the italics, boldface, and regular face of a typeface or of one of its fonts. In phoneme recognition, one subset can be for each of a number of speakers or for each of a number of distinctive ways of pronouncing words. In both character and phoneme recognition, subsets can be provided for different parts of speech, different languages, different specialized vocabularies, and so forth. This technique reduces the size of the subsets and can also allow word feature recognition--the subset within which a string is recognized also indicates features such as typeface or part of speech of a word it is likely to be.

The second of these further aspects provides parallel use of such subset data structures. For example, each subset data structure can be stored in a respective memory and be searched by a respective processor. Furthermore, these processors can operate in parallel with one or more processors performing other recognition operations, so that candidate identifier string recognition can proceed in parallel with conventional recognition techniques.

The third of these further aspects follows from realizing that the results of string subset recognition may be ambiguous. This problem can be solved by providing a results processor that receives the results from all of the parallel subset search processors and uses them to obtain a recognized sequence of characters or phonemes. The results processor can also receive results from any other processors in parallel with subset search processors. The results processor can also participate in the control of the parallel subset search processors by determining when they should stop attempting recognition of a given portion of text or speech and start on a subsequent portion.

The present invention will now be described by way of example, with reference to the accompanying drawings, in which:

Fig. 1 is a schematic diagram showing general stages by which missegmented character candidates in a text can lead to correctly-recognized characters in accordance with the invention;

Fig. 2A is a schematic diagram representing a data structure with data indicating a set of character candidate strings;

Fig. 2B is another schematic diagram representing a data structure, with data indicating a set of character candidate strings and likely words;

Fig. 3A is a flow chart showing general steps in using a data structure like that in Fig. 2A;

Fig. 3B is a flow chart showing general steps in using a data structure like that in Fig. 28;

Fig. 4 is a flow chart showing general steps in obtaining a set of character candidate strings to produce a data structure with data indicating such a set of strings;

Fig. 5 is a schematic block diagram showing general components of a system with parallel recognition units, each including a data structure with data indicating a set of character or phoneme candidate strings;

Fig. 6 is a flow chart showing general steps in the operation of the results processor in Fig. 5;

Fig. 7 is a flow chart showing steps that can be used in implementing Fig. 4 to determine whether a character candidate string is likely to be any of the words on a word list;

Fig. 8 is a flow chart showing steps that can be used in implementing Fig. 4 to obtain a word's expanded character candidate strings for inclusion in a set of such strings;

Fig. 9 is a flow chart showing steps that can be used to produce a group of subset data structures for use in parallel recognition units as in Fig. 5;

Fig. 10 is a block diagram showing connections between a results processor and other components in a system that includes parallel recognition units as in Fig. 5;

Fig. 11 is a flow chart showing steps the results processor of Fig. 10 can perform in providing a stream of recognized characters or phonemes;

Fig. 12 is a flow chart showing steps the results processor of Fig. 10 can perform in response to an interruption from the candidate discriminator;

Fig. 13 is a flow chart showing steps the results processor of Fig. 10 can perform in response to an interruption from one of the parallel recognition units, and

Fig. 14 is a block diagram showing a system in which a serial processor performs the functions of several of the processors in Fig. 10.

A. Conceptual Framework

The following conceptual framework is helpful in understanding the broad scope of the invention, and the terms defined below have the meanings indicated throughout this application, including the claims.

A "word" is the smallest unit of meaning in a language. "Written words" means words recorded in the form of discrete elements such as alphabetical, numerical, or pictographic elements. "Spoken words" or "speech" means words received in a continuous form such as from an utterance of a speaker. Words recorded in continuous form such as recorded speech are therefore not written words, but are spoken words when played back. An "isolated spoken word" is a spoken word that is received discretely from any preceding or following words.

A "text" is an arrangement of written words, ordinarily a sequence. A text may thus include zero or more words, each with at least one discrete element.

A "character" means a discrete element appearing in text. Characters can thus include not only alphanumeric elements, but also punctuation marks, diacritical marks, and other elements included in text. A "character type" is a category of which a character may be an instance, such as a letter or number.

A "phoneme" means an element that is a part of a sequence of elements that occurs in speech. The phonetical representation of a word as found in a dictionary is a sequence of phonemes. A "phoneme type" is a category of which a phoneme may be an instance.

A "character identifier" is a data structure whose data indicates one of a set of character types. A "phoneme identifier" is a data structure whose data indicates one of a set of phoneme types.

A "character candidate" is any part of a text that is separately presented to a system for classification or identification. In typical character recognition systems, a character candidate is a part of the text that has been segmented on the basis of criteria that indicate the character candidate is a character.

A "phoneme candidate" is any part of an utterance that is separately presented to a system for classification or identification. In typical phoneme recognition systems, a phoneme candidate is a part of an utterance that has been segmented on the basis of criteria that indicate the phoneme candidate is a phoneme.

A "candidate" can mean either a character candidate or a phoneme candidate.

A "character probability space" is a mathematical space in which each dimension indicates the probability that a candidate is an instance of a specific character type. A "phoneme probability space" is a mathematical space in which each dimension indicates the probability that a candidate is an instance of a specific phoneme type.

A "character candidate type" is a category of which a character candidate may be an instance. A "set of character candidate types" includes a number of such categories.

A "phoneme candidate type" is a category of which a phoneme candidate may be an instance. A "set of phoneme candidate types" includes a number of such categories.

The term "candidate type" includes both character candidate type and phoneme candidate type. A set of types can be modified by changing one or more of the categories.

A "machine discriminatable character candidate type" is a character candidate type that can be accurately discriminated from other types by a machine. A "machine discriminatable phoneme candidate type" is a phoneme candidate type that can be accurately discriminated from other types by a machine. As discussed above, character types and phoneme types are generally not machine discriminatable, because they cannot be accurately discriminated between by a machine.

A "data structure" is any combination of interrelated data. A "processor" is any component that can process data. Data is "accessible" when it can be accessed by a processor. Data is accessible "in a data structure" when the data is accessible by operations that include accessing the data structure prior to accessing the data. A "data unit" is a data structure that is accessible as a unit by the data processing system. "Including" data in a data structure means performing whatever operations are necessary to make the data accessible in the data structure.

Data "indicates" a respective member of a set when a processor can determine the respective member based on the data. Data "indicates" a set when it includes data indicating each member of the set.

A "directed graph data structure" is a data structure that includes data defining a set of nodes and a set of edges (or arcs), each of the edges originating in one of the nodes and terminating in one of the nodes.

A "finite state transducer data structure" is a directed graph data structure whose data defines a set of nodes, called states, and a set of edges, called transitions, as follows: There is a single start state from which any of the other states can be reached by following a sequence of the transitions. This can be done by accessing the part of the data that defines the start state and then accessing further parts of the data to follow the sequence of transitions. The parts of the data that define the sequence of transitions also indicate, for each transition, a pair of elements from two sets such that the sequence of elements from one set is paired with the sequence of elements from the other.

A "character candidate identifier" is a data structure whose data indicates one of a set of character candidate types. A "phoneme candidate identifier" is a data structure whose data indicates one of a set of phoneme candidate types.

A "string" of identifiers is a data structure that includes an ordered set of identifiers. Data "indicates" such a string by indicating the ordered set of identifiers of the string. A set of such strings may be "obtained" by obtaining data indicating each of the strings in the set.

B. General Features

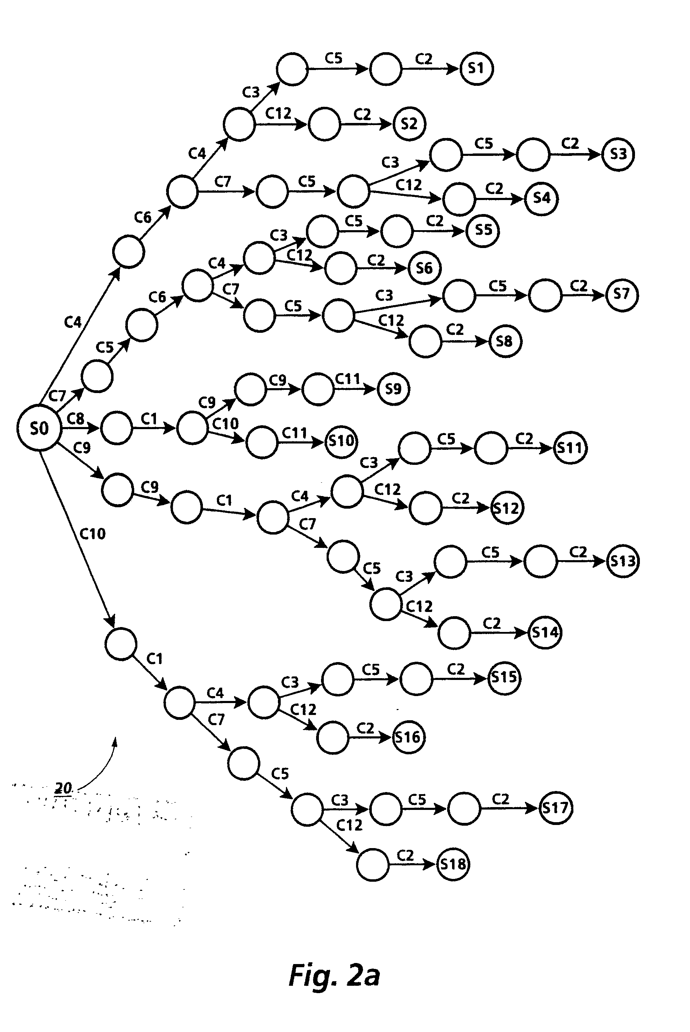

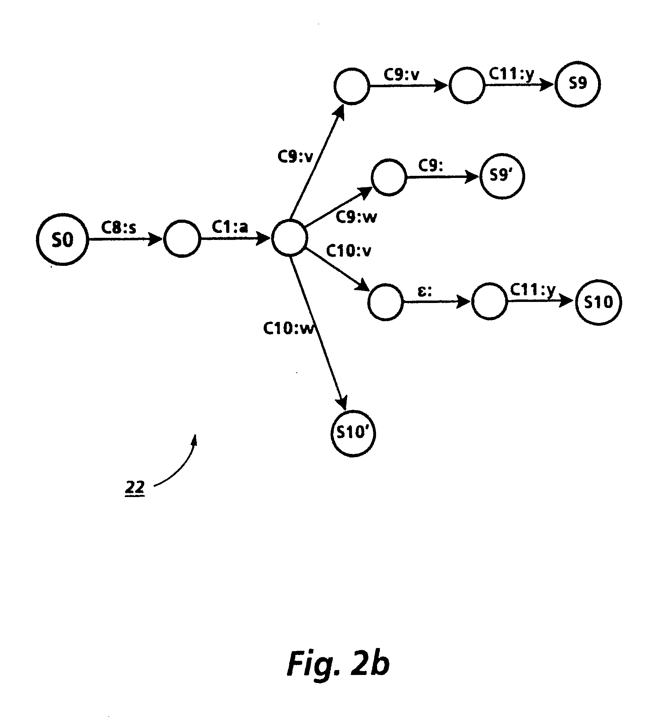

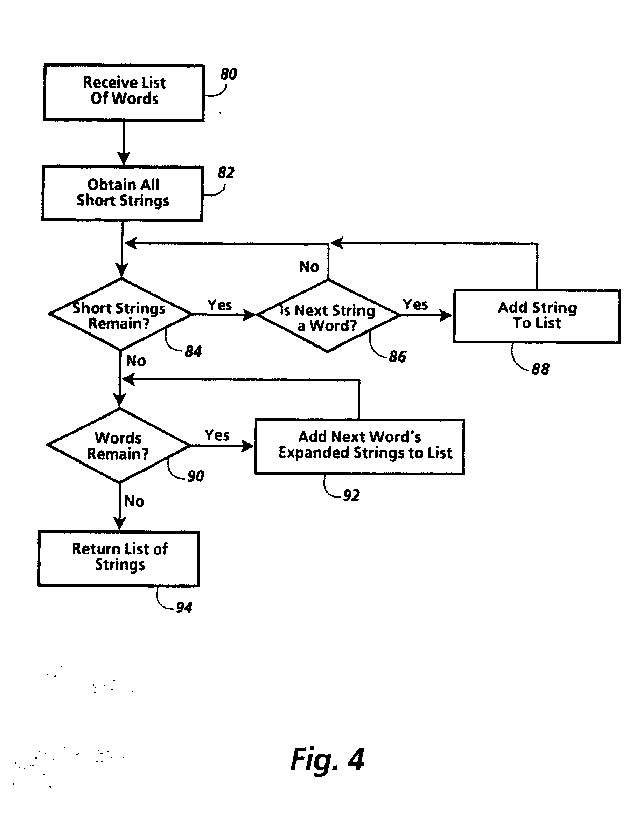

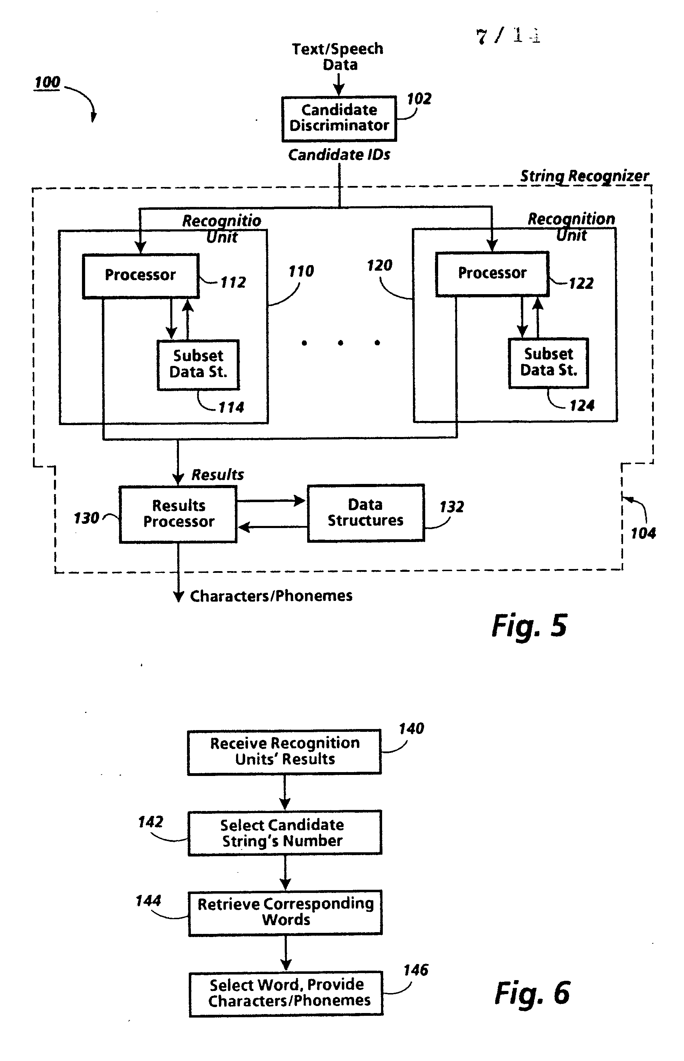

General features of the invention can be understood from Figs. 1-6. Fig. 1 shows general stages by which missegmented character candidates in a sample text can lead to correctly-recognized characters. Fig. 2A illustrates an example of a data structure with data indicating a set of character candidate strings. Fig. 2B illustrates a portion of a similar data structure that can be used to obtain a character string based on a character candidate string Fig. 3A shows general steps in using a data structure like the one in Figs. 2A, and Fig. 3B shows general steps in using a data structure like the one in Fig. 2B. Fig. 4 shows general steps in obtaining a set of strings to produce such a data structure. Fig. 5 shows general components of a system with parallel recognition units, each including such a data structure. Fig. 6 shows general steps in the operation of the results processor in Fig. 5.

In general, the techniques of the invention can be applied to recognition of phonemes in isolated word speech as well as to recognition of characters in text. The techniques of Figs. 1-4 could be applied to phonemes with slight modifications, and the techniques of Figs. 5 and 6 are directly applicable both to characters and phonemes.

The first general stage in Fig. 1 is the segmentation of text that includes the words "savvy morning warning," as shown in box 10. Segmentation errors illustrated in Fig. 1 include the mistaken inclusion of two consecutive characters in a single character candidate where the characters are "vv," "rn," or "in," and the mistaken separation of a single character into two candidates where the character is "m" or "w."

The character candidates that result from segmentation are then recognized through a technique that yields, for each candidate, an identifier of its respective machine-discriminatable character candidate type, as shown in box 12. Each character candidate identifier in box 12 includes for purposes of illustration the letter "C" followed by a number that indicates the candidate's respective type, but these identifiers could take any appropriate form. This stage could be implemented to obtain an identifier of a cluster in character probability space. The string of identifiers in box 12 also includes end-of-word (EOW) identifiers indicating a space or other break point between words in the text.

Each string of character candidate identifiers that occurs between EOW identifiers can then be converted to a string identifier, as shown in box 14; each string identifier in box 14 includes for purposes of illustration the letter "S" followed by a number that indicates a string of character candidate identifiers. This conversion can be done with a data structure that includes data indicating a set of candidate identifier strings. If a string from box 12 is one of the set, the data structure can be used to obtain the string identifier that indicates that string.

Each string identifier can then be used to obtain a respective word identifier, as shown in box 16; each word identifier in box 16 includes for purposes of illustration the letter "W" followed by a number that indicates a word. This conversion can be done with a data structure, such as a look-up table, that provides a respective word identifier when accessed with a string identifier.

Finally, each word identifier can then be used to obtain the character codes of the word it indicates, as shown in box 18; each character code in box 18 is shown for purposes of illustration as a character, but would in practice be an ASCII code or other appropriate code indicating the character.

The example in Fig. 1 illustrates how character candidate string recognition could be used to improve recognition of incorrectly segmented text. The general sequence of stages in Fig. 1 would be applicable to many other commonly occurring problems in character recognition. For example, the stages in Fig. 1 could be applicable where different characters are not machine discriminatable; this may occur because the machine is not able to discriminate between different characters such as "6" and "b," because the machine is not able to discriminate between characters in different fonts or cases such as "c" and "C," or because the machine is not able to discriminate between characters because one is modified such as by being skewed or by being modified by noise such as dots or white spaces so that it looks like another character. The stages in Fig. 1 could also be applicable where a word is misspelled.

Fig. 2A is a representation of data structure 20 that could be used to recognize and convert strings of character candidate identifiers, as in box 12 in Fig. 1, to string identifiers, as in box 14. Data structure 20 includes circles, representing nodes of a directed graph data structure, and lines, representing edges or arcs. Each edge has an associated candidate identifier that is accessible when data indicating that edge is accessed, as shown. Similarly, each node that is reached at the end of an acceptable string has an associated string identifier for that string that is accessible when the preceding edge's identifier is matched.

Data structure 20 includes data indicating a list of 18 strings obtained by expanding the three words "savvy," "morning," and "warning" based on the possible segmentation errors discussed above. The word "savvy" is subject to one segmentation error, so that it can be expanded into two possible strings, shown in Fig. 2 as "C8-C1-C9-C9-C11" and "C8-C1-C10-C11." The words "morning" and "warning" are each subject to three segmentation errors, so that each of them can be expanded into eight possible strings.

The strings indicated by data structure 20 have been collapsed on the left in Fig. 2A, and the data indicating those strings can be correspondingly collapsed to eliminate redundancy and reduce the memory required to store data structure 20.

Fig. 2B is a representation of data structure 22 that is similar to data structure 20 in Fig. 2A. In addition to providing a string identifier, data structure 22 also provides a character string based on a character candidate string. As a result, data structure 22 can be used to obtain a character string based on a candidate identifier string without using a string identifier or a word identifier, as shown in boxes 14 and 16 in Fig. 1.

As shown in Fig. 2B, each edge in data structure 22 has an associated pair that includes a candidate identifier and a character identifier. The character identifier can be accessed by accessing data indicating the edge, just like the candidate identifier. As discussed below, such a data structure can be produced through finite state transducer techniques, in which case the data structure is a finite state transducer data structure, as defined above.

Data structure 22 includes data indicating two strings not indicated by data structure 20. These two strings, identified as S9' and S10', can each result from an attempt to recognize the word "saw." The word "saw" is subject to the opposite segmentation error from that of the word "savvy," discussed above, and can be expanded into two possible strings, S9′ and S10′.

Strings S9′ and S10, slightly modified from Fig. 2A, illustrate edges for which the associated pair includes an epsilon ($\epsilon$). The epsilon is used when there is not a one-to-one relationship between candidate identifiers and character identifiers. In string S9′, the pair C9:$\epsilon$ occurs because a sequence of C9-C9 generates the single character "w." Similarly, in string S10, the pair $\epsilon$:v occurs because the candidate identifier C10 generates the sequence of characters "vv"

Fig. 3A shows general steps in accessing data structure 20 or a similar data structure with a candidate identifier string such as those in box 12 in Fig. 1. The steps in Fig. 3A begin upon receiving a candidate identifier string, in box 30. The step in box 32 begins the search by accessing the start node of data structure 20, the node labeled S0 in Fig. 2A, which serves as the initial current node.

The steps in Fig. 3A include two iterative loops, an outer iterative loop that goes through the candidate identifiers in the string, and an inner iterative loop that compares the current identifier from the string with the candidate identifier for each outgoing edge from the current node. Instead of two iterative loops, this technique could be implemented by using each candidate identifier in the string as an index into data structure 20.

The test in box 34 begins the outer iterative loop. As long as candidate identifiers remain, the step in box 36 takes the next candidate identifier from the string, and the test in box 38 then begins the inner iterative loop. If a match is detected in box 40, the destination node of the matching edge becomes the current node, in box 42, and the outer iterative loop then returns to the test in box 34. But if a match is not detected, the inner iterative loop returns to box 38. When the test in box 38 determines that all of the outgoing edges of the current node have been handled in this manner without a match, a value is returned indicating a failure to match the candidate identifier string, in box 44.

When all the candidate identifiers from the string have been successfully matched, the test in box 46 determines whether the current node is the end of an acceptable string, shown in Fig. 2 as a circle with a string identifier in it, as noted above. If so, the string identifier is returned in box 48, indicating a successful search. But if not, a value is returned indicating a failure, in box 44.

Fig. 3B is generally similar to Fig. 3A, with the steps in boxes 50,52,54,56,58,60, and 70 corresponding to the steps in boxes 30,32,34,36,38,40, and 46. Other steps in Fig. 3B are different, however, because the steps in Fig. 3B are appropriate for data structure 22 or a similar data structure in which each edge has an associated pair that includes a candidate identifier and a character identifier.

When a match of the candidate identifier associated with an edge is found in box 60, the step in box 62 loads data onto a stack indicating the character identifier paired with the matched candidate identifier, the current location in data structure 22, and data from which the current position in the candidate ID string can be determined. Then the current node is set to the destination of the next edge, in box 64, before returning to the test in box 54.

When the test in box 58 determines that all the edges have been handled for a given candidate ID without finding a match, or when the test in box 70 determines that a matched string is not an acceptable string, the test in box 66 determines whether the stack is empty. If the stack is not empty, it may be possible to find a matching string by backing through the stack and pursuing other search paths. Therefore, the step in box 68 pops the top entry from the stack, goes to the location in data structure 22 indicated in that entry and also to the candidate ID at the indicated position in the candidate ID string; if the entry corresponded to an edge with $\epsilon$ as its candidate identifier, there may be no change in the position in the candidate ID string. Then the step in box 58 is repeated to determine whether there are any alternative edges at that location that have not yet been considered.

If the test in box 70 determines that a matched string is acceptable, the step in box 72 stores a string of character IDs obtained by going through the stack and pulling out character IDs other than $\epsilon$. This step can also store the string identifier if appropriate. Then, the test in box 66 determines whether the stack is empty as described above.

When the test in box 66 finally determines that the stack is empty, the test in box 74 determines whether any strings of character IDs have been stored by the step in box 72. If so, the stored character ID strings are returned, in box 76, but if not, a signal indicating failure is returned, in box 78.

Fig. 4 shows general steps for using a list of words, received in box 80, to obtain a list of strings like that included in data structures 20 and 22. The steps shown in Fig. 4 obtain strings with two approaches: One approach is to generate all strings of a given length and then compare each string with a list of words to determine whether it is likely to occur as one of the words. The other approach is to expand each word to obtain corresponding strings.

The step in box 82 begins the first of these two approaches by obtaining all strings of short length. For example, all strings having one or two candidate identifiers may be obtained. The step in box 84 begins an iterative loop that handles each of the strings obtained in box 82. If the test in box 86 determines that the next string is likely to occur as one or more of the words, that string and its corresponding words are added to a list of strings, in box 88.

The step in box 90 begins an iterative loop that applies the second of the two approaches described above, handling each word in the list received in box 80. The step in box 92 expands the next word into a set of strings and adds those strings to the list, associating the word with each string. If a given string is already on the list, the word can be added to that string's corresponding words on the list.

When all the words have been handled in this manner, the step in box 94 returns the list of strings obtained. Those strings can then be used to create data structures like those in Figs. 2A and 28, as discussed in more detail below.

Fig. 5 shows how a number of data structures like those in Figs. 2A and 2B can be used in parallel. System 100 in Fig. 5 includes two main components: Candidate discriminator 102 receives information about text or speech being recognized and provides character or phoneme candidate identifiers. String recognizer 104 recognizes strings of the candidate identifiers and, based on recognized strings, provides a stream of characters or phonemes corresponding to the text. The parallel data structures are used within string recognizer 104.

As shown in Fig. 5, string recognizer 104 includes a plurality of recognition units, two of which are shown. Recognition units 110 and 120 include respective processors 112 and 122 and respective subset data structures 114 and 124. Processors 112 and 122 are each connected to receive candidate identifiers from candidate discriminator 102 and to access the respective subset data structure 114 or 124. Processors 112 and 122 can therefore each perform steps like those shown in Fig. 3 to determine whether a string of candidate identifiers received from candidate discriminator 102 is in the respective subset of candidate identifier strings.

Processors 112 and 122 are also each connected to provide their results to results processor 130. Results processor 130 accesses data structures 132 to assist it in providing output characters or phonemes based on the results from the recognition units.

Fig. 6 shows general steps that results processor 130 can follow if the results it receives include candidate string numbers, as provided in box 48 in Fig. 3A, or phoneme string numbers. In box 140, it receives results from the recognition units relating to a candidate string. In box 142, results processor 130 selects one of the string numbers occurring in the results as that of the candidate string. Then, in box 144, it retrieves the corresponding words from data structures 132. In box 146, it selects one of the words and provides the characters or phonemes of that word as output or for subsequent processing. Note that if results processor 130 receives strings of character identifiers, as provided in box 76 in Fig. 3B, or strings of phoneme identifiers, only the step in box 146 would be necessary.

Figs. 1-6 thus illustrate several of the general features of the invention. We turn now to examine in more detail how the invention could be implemented.

## C. Implementation

The invention could be implemented in a wide variety of ways. The specification sets out examples of how several features could be implemented, including steps for obtaining a set of strings; steps for obtaining a data structure indicating a set of strings; processor operations for searching such a data structure; and processor operations for handling results from parallel recognition units. In addition to parallel recognition units, the use of a single serial processor is also considered for candidate discrimination, search, and results processing.

## 1. Obtaining Character Candidate Strings

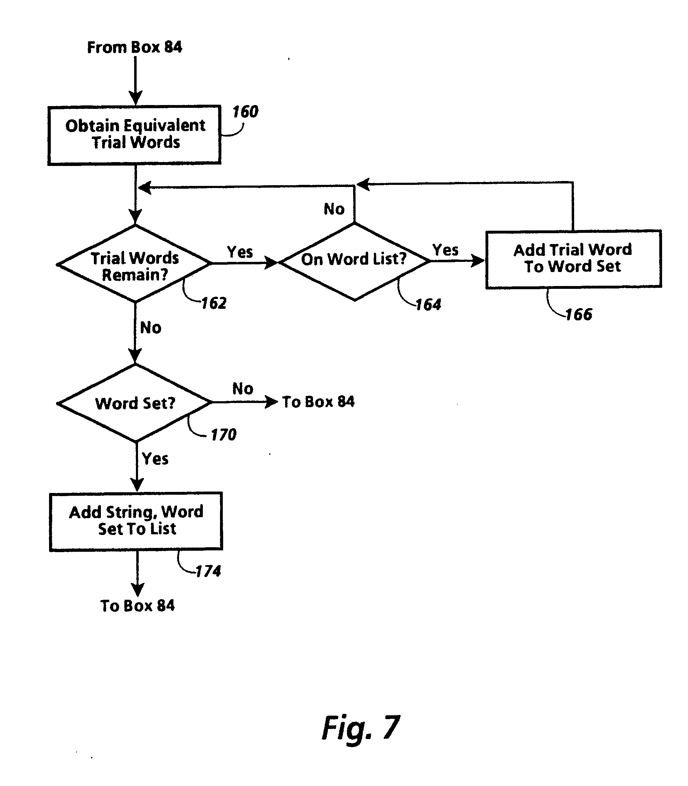

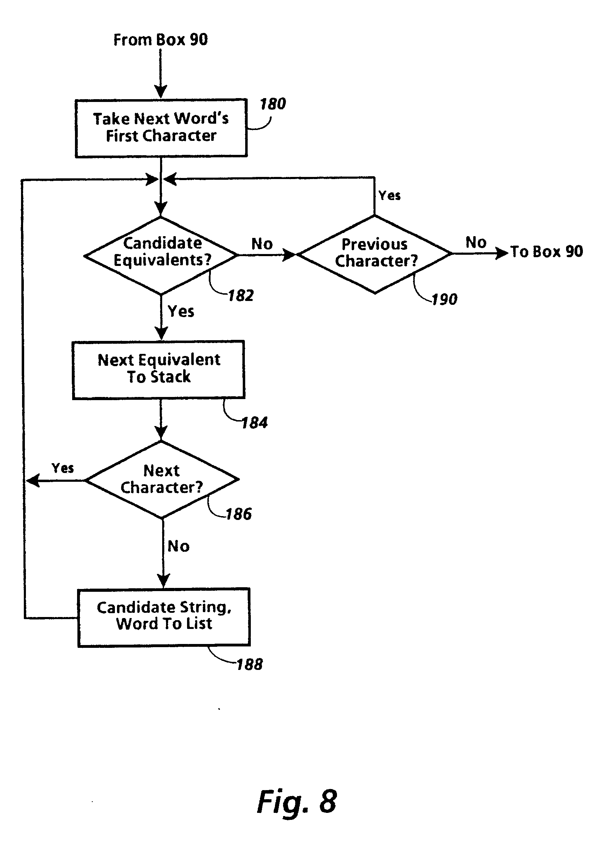

Fig. 4, described above, shows general steps that can be followed in obtaining a set of character candidate strings. Fig. 7 shows in greater detail how the steps in boxes 86 and 88 in Fig. 4 could be implemented, and Fig. 8 shows in greater detail how the step in box 92 in Fig. 4 could be implemented.

Steps similar to those in Figs. 7 and 8 could be used to obtain a set of phoneme candidate strings. This could be done by modifying the steps shown to apply to speech, phonemes, phoneme types, phoneme candidates, and phoneme candidate types rather than to text, characters, character types, character candidates, and character candidate types.

The steps in Fig. 7 can be followed for each of the short strings obtained in box 82 in Fig. 4, implementing the iterative loop that begins with the test in box 84 in Fig. 4. The step in box 160 obtains a set of trial words equivalent to the character candidate string currently being handled. This step can be performed based on empirical data indicating, for each machine discriminatable character candidate, the character types of which it can be an occurrence. To obtain these data, a candidate discriminator could be tested with representative samples of text similar to text it will encounter in normal operation, keeping a record of the character types that it recognizes as each of its discriminatable character candidate types and also of the character candidate types for each character type. Then, the record of character types for each character candidate type could be pruned to a small set of character types by selecting those character types which either have a high frequency for that character candidate type or are character types for which that character candidate type has a high frequency. The small set of character types for each character candidate in the string being handled can then be used to obtain all the combinations of character types that are likely to be recognized as that string, and those combinations form the set of trial words obtained in box 160.

The step in box 162 then begins an iterative loop that handles each of the trial words in turn. The test in box 164 determines whether the next trial word is one of the words on the word list obtained in box 80 in Fig. 4. If so, the step in box 166 adds that trial word to a word set for the character candidate string being handled.

When all the trial words have been handled in this manner, the test in box 170 determines whether the word set for the character candidate string being handled includes any words. If not, the step in box 84 can be performed to handle the next character candidate string. But if some words have been found, the step in box 172 adds the character candidate string and its respective word set to the list of acceptable character candidate strings, before returning to box 84.

The steps in Fig. 8 can be followed for each of the words on the word list received in box 80 in Fig. 4, implementing the iterative loop that begins with the test in box 90 in Fig. 4. The step in box 180 begins the iterative loop with the first character of the word being handled. The test in box 182 then determines whether the character currently being considered has any candidate equivalents that have not yet been applied. If so, the step in box 184 loads the next equivalent candidate identifier or identifiers onto a stack.

Equivalent candidate identifiers for each character can be stored in an appropriate data structure, available for retrieval in box 184. For example, the data structure could include a linked list for each character, the linked list including each set of one or more candidate identifiers equivalent to that character. A set of candidate identifiers equivalent to a sequence of more than one character could be included in the linked list of the first character in the sequence, together with data indicating the following characters of the sequence.

In determining whether a character has any equivalents in box 182, the operation performed could depend on whether the character has been handled for a given equivalent of the preceding character. The first time the character is handled for each such equivalent, its linked list would be accessed and the first set of equivalent candidate identifiers would be loaded onto the stack, together with a pointer to the next element of the linked list. Subsequently, upon handling the same character, the pointer from the stack would be used to retrieve its next equivalent from the linked list. It follows, then, that the stack should have a position for each character of the word that has been handled at least once. In addition, each stack position should be able to hold up to the maximum possible size of a set of candidate identifiers.

In addition, it is useful to have a dummy candidate identifier that, when loaded into a character's position in the stack, indicates that this position should be skipped when reading identifiers from the stack. When an element in a linked list is equivalent to a sequence of more than one character, and when the word being handled includes that sequence, the dummy identifier can be loaded into the stack positions of the second and subsequent characters in the sequence to assist in keeping track of which character is the current character. After loading an equivalent into the stack in box 184, the test in box 186 determines whether the word has a next character following the character whose stack position was last loaded. If not, the last character of the word has been reached, and the string of candidate identifiers in the stack, together with the word, is added to the list of strings and their word sets, discussed above in relation to Fig. 7. Any dummy identifiers in the stack are skipped in reading the string. If the string is already in the list, the word is added to the string's word set. Then, the test in box 182 is repeated for the character currently being handled, to see if it has further equivalents.

If the test in box 186 determines that there is a next character after the character whose stack position was last loaded, whether with a set of identifiers or with a dummy identifier, that next character becomes the current character. The first element of its linked list of equivalents is loaded, in box 184, after the test in box 182 determines that it has equivalents. Similarly, when the test in box 182 determines that the last element in a character's linked list has been reached, all of that character's equivalents have been applied. For this purpose, the last element in each linked list can have a value that indicates it is a last element and does not include any candidate identifiers. The test in box 190 then finds the word's nearest previous character whose stack position contains a set of candidate identifiers rather than the dummy identifier. That previous character then becomes the current character and the test in box 182 determines whether it has any equivalents that have not been applied.

If the test in box 190 determines that there is no previous stack position with candidate identifiers, all of the equivalents of all of the characters have been applied in all combinations. Therefore, the word has been fully expanded, so the next word is handled by returning to the step in box 90.

The steps of Figs. 7 and 8 can thus provide a list of strings with corresponding words from a set of acceptable words.

## 2. Subset Data Structures

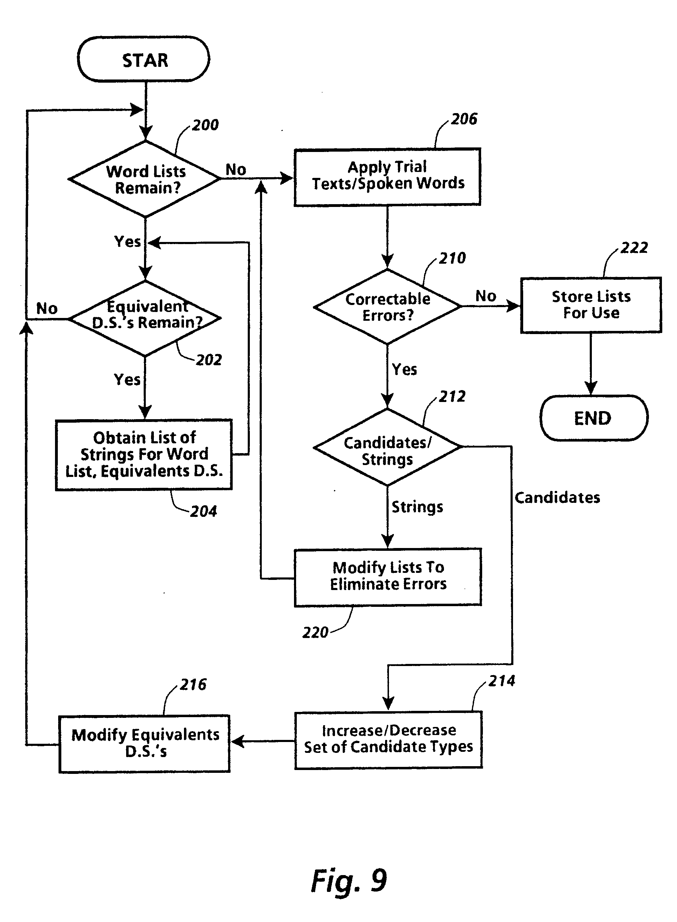

Each of the recognition units in Fig. 5 includes a subset data structure that can be based on a list of character or phoneme candidate strings obtained as shown in Figs. 4,7, and 8. Fig. 9 shows how a group of subset data structures can be produced for use in parallel recognition units as in Fig. 5. The steps in Fig. 9 include several iterative loops. The outermost loop is used to tune a candidate discriminator so that it discriminates an appropriate set of character or phoneme candidate types. An intermediate and an innermost loop together apply all appropriate candidate equivalent data structures to each of a number of word lists to obtain the lists of strings on which the subset data structures are based. Another inner loop allows for manual modification of the lists of strings.

The step in box 200 begins the intermediate loop, which is repeated for each of the word lists. The step in box 202 similarly begins an inner loop which is repeated for each data structure with equivalent candidate identifiers that is appropriate for the word list being handled. The step in box 204 applies one of the data structures of equivalents to the current word list to obtain a list of strings, as in Figs. 4,7, and 8.

The different word lists handled in the intermediate loop could, for example, include a word list for each part of speech, a word list for each of a number of languages, a word list for each of a number of speakers or writers, special word lists for abbreviations and proper nouns, a word list for each of a number of specialized vocabularies, different word list for words in all lower case or with an initial upper case character, and so forth for any other appropriate list or set of words. The data structures of equivalents for text recognition could include equivalents for each of a number of fonts or typefaces, which might include italics, bold, underlined, overstrike, and so forth. In each data structure of equivalents for text recognition, the upper case and lower case of each character could have separate lists of equivalents.

When all the lists of strings have been obtained, the step in box 206 applies trial texts or spoken words to the candidate discriminator, and then applies the resulting candidate identifiers to the lists. The results from the lists are compared with the correct results to find errors, in box 210.

If errors are found in box 210, the step in box 212 branches based on whether any of the errors are correctable by modifying the set of character or phoneme candidate types. If so, the step in box 214 increases or decreases the number of types as appropriate. For example, if an error is one of consistently treating two machine discriminable characters or phonemes as the same candidate type, it may be possible to increase the number of types by dividing that candidate type into two types. Conversely, if an error is one of consistently distinguishing between two forms of a character or phoneme that need not be discriminated, the number of types can be reduced so that only one type covers both forms.

When the types have been modified, the step in box 216 modifies the data structures of equivalents accordingly. The modified data structures can then be used in the iterative loops that begin with the step in box 200.

When it is not appropriate to change the candidate types, the step in box 220 corrects the lists themselves, as appropriate, to eliminate errors. For example, if a word is not in the word set for a candidate string that frequently matches it, the word can be added to the word set for that string, and so forth. The step in box 206 can then be repeated with the modified lists.

The steps in boxes 210,212,214 and 220 could be performed automatically, to some extent, but it may be more effective to do them manually with an expert operator. An expert operator could, for example, make appropriate judgments about which errors should be corrected and which are better left uncorrected.

When there are no more errors that should be corrected, the step in box 222 stores each list for use as a subset data structure, in a permanent memory such as a ROM or in any other suitable memory device. The storing step in box 222 could be done in any appropriate way, including the two different ways suggested in Figs. 2A and 2B. A list of strings can be stored in a form that includes any appropriate additional data, such as data to provide a string identifying number when a string is matched.

The storing step in box 222 could be implemented by using each list of strings to create a directed graph data structure in the manner described in the article by Appel and Jacobson, cited above, collapsing redundant candidate identifiers at the beginning of the strings on each list. The directed graph for each list could then be minimized using conventional techniques, to eliminate redundant candidate identifiers at the ends of the strings. As described by Appel and Jacobsen, the minimized directed graph data structure could be stored as an array of edges or transitions.

To produce a data structure like that in Fig. 28, finite state transducer techniques, also known as Mealy machine techniques, can be applied. A chain transducer can be produced for each of a list of pairs, each pair including a string on the list and a word from the string's word set. The union of these chain transducers can then be taken to produce a data structure with a common start state. This data structure can then be determinized and minimized to obtain a data structure to be stored. Epsilons can be added to the chain transducers as necessary, but the resulting data structure may not be deterministic or minimal because of the epsilons.

One technique for obtaining a string identifier or other relevant data upon matching a string is to include that data in the data structure such that it can be retrieved when the string is matched. It would also be possible to store the list of strings simply as a list, using conventional techniques for storing word lists in line, in which case a number identifying each string could be obtained simply by counting through the strings in the list. There are many other conventional techniques for obtaining an identifier, such as a hash table, and any suitable technique would be appropriate.

If it is desirable to accelerate search, the beginning of the first string beginning with each candidate identifier can be treated as an access point, with an access table including the data necessary to begin a search at each access point. This access table can also be included in the data structure stored in memory.

The data structure stored in memory could be searched in the manner described above in relation to Figs. 3A and 3B. The steps followed in preparing a subset data structure to be stored determine to a large extent the steps followed by a search processor in searching it. As shown in Fig. 5, the results processor of a parallel implementation may receive results from a number of search processors in parallel. Therefore, in returning results, each search processor may provide additional data identifying which search processor is the source of the value and indicating which string in the sequence of strings from candidate discriminator 102 corresponds to the value. Each search processor can manage a buffer of strings received from the candidate discriminator, and this operation can include keeping a running count of strings received so that this running count can be provided to indicate the current string.

The results processor of a parallel implementation is now discussed in greater detail.

3. Results Processor for Parallel Recognition Units

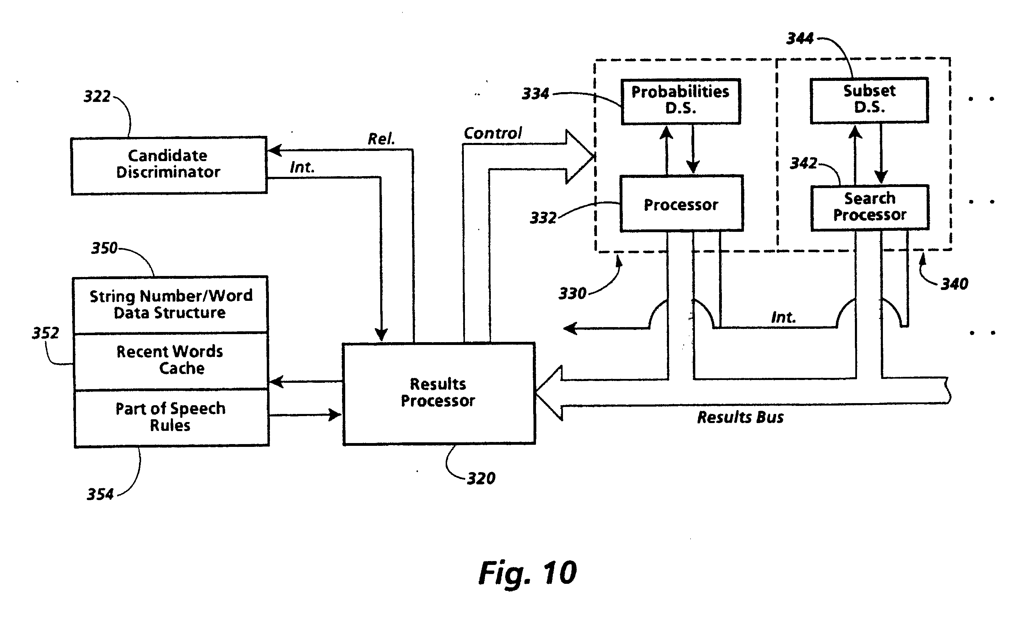

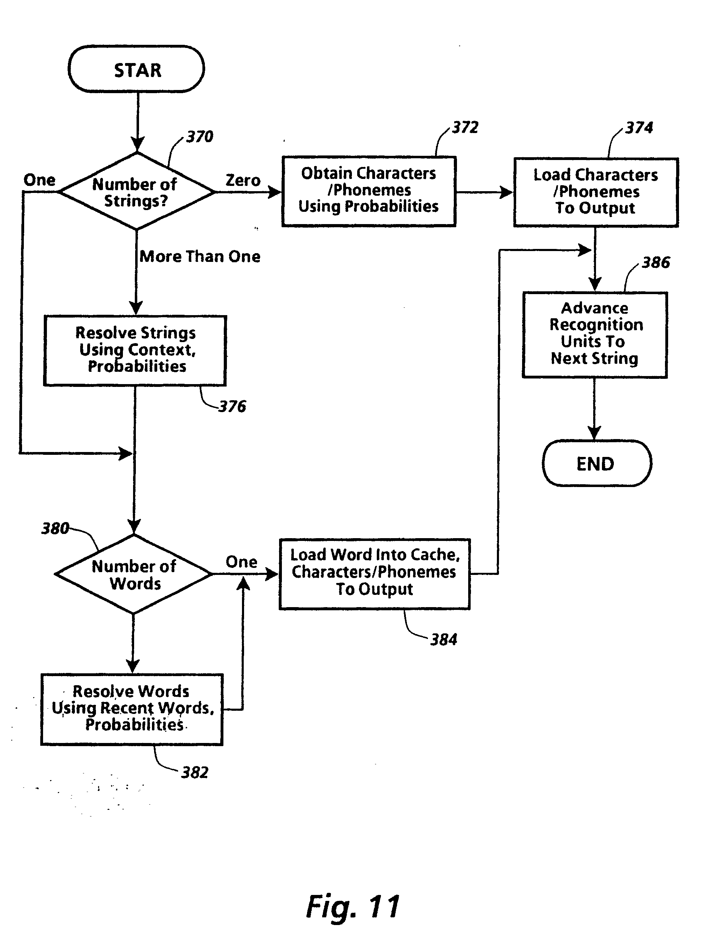

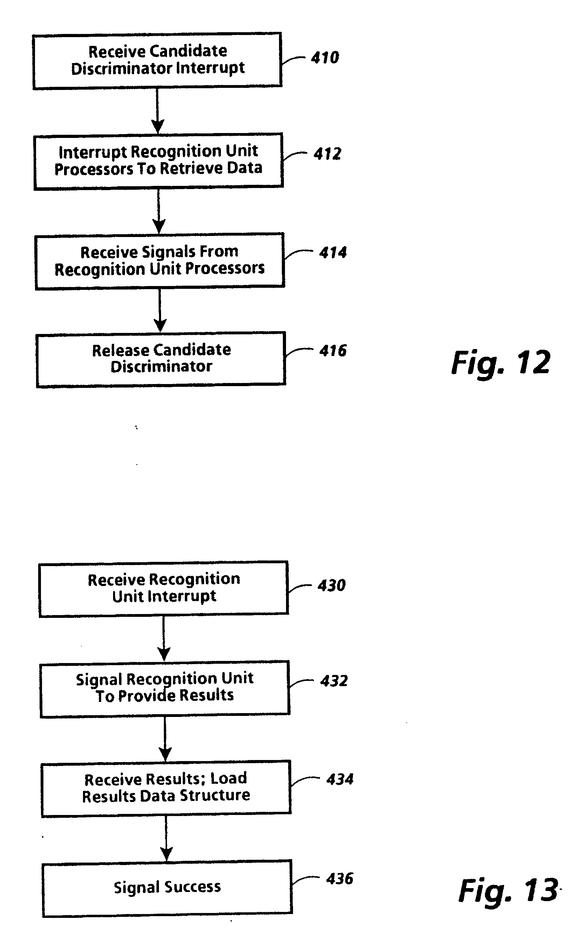

In addition to the general steps shown in Fig. 6, the results processor can perform other functions relating to the operation of parallel recognition units. Fig. 10 shows connections between a results processor and certain other components of a parallel implementation. Fig. 11 shows steps a results processor of such an implementation can perform in providing a stream of recognized characters or phonemes. Figs. 12 and 13 show steps a results processor can follow in response to interrupts from a candidate discriminator or a recognition unit.

Results processor 320 in Fig. 10 is connected to receive an interrupt signal from candidate discriminator 322. This signal can indicate that discriminator 322 has detected an end of string, and is ready to provide the candidate identifiers of the string to the recognition units. It can also indicate that candidate discriminator 322 has begun to provide new candidate identifier data at its outlet for the recognition units. When such data has been received by all recognition units, results processor 320 can provide a release signal to discriminator 322.

Figure 10 shows results processor 320 connected to recognition units 330 and 340. Recognition unit 330 includes processor 332 and probabilities data structure 334; for text recognition, probabilities data structure 334 can store data indicating the character probabilities of each character candidate type. 07/XXX,XXX (Docket No. D/87181), incorporated herein by reference. Recognition unit 340, on the other hand, is one of a number of parallel recognition units of the type described above in relation to Fig. 5, with search processor 342 and subset data structure 344.

Results processor 320 has a number of connections with each recognition unit. Each recognition unit has an interrupt line to results processor 320; this interrupt can be used to indicate that a recognition unit's processor is prepared to provide results on a results bus that is connected to all recognition units and to results processor 320, which can also control the bus. Results processor 320 also has a number of control lines to each recognition unit, including lines to interrupt a recognition unit's processor to receive data from discriminator 322; lines to provide the sequence number of a string on which all recognition units can begin operating; lines to interrupt each recognition unit's processor so that it will read a sequence number and advance to the corresponding string if it has not yet reached it; and lines to signal each processor to provide its results on the results bus and to signal that its results have been received by results processor 320.

Results processor 320 also can access a number of data structures, some of which are illustratively shown in Fig. 10. String number/word data structure 350 can be accessed with a string number from one of the recognition units to obtain the word set for that string or other data relating to that string; data structure 350 may not be necessary if each subset data structure provides the word set for a matched string, as would be possible with the data structure shown in Fig. 2B. Recent words cache 352 is a cache of recently recognized words, which can assist results processor 320 in resolving ambiguous words. Part of speech rules 354 are rules that results processor 320 can also apply to resolve ambiguous words.

The steps in Fig. 11 illustrate operations results processor 320 could perform in providing a stream of characters or phonemes based on results from recognition units like those shown in Fig. 10. Fig. 11 shows steps performed based on the results of one of the strings from candidate discriminator 322. As discussed below, the results for each string can be loaded into a respective results data structure and a background process can check each results data structure to determine whether it contains sufficient data; if so, the background process can initiate the steps in Fig. 11 for that data structure. The steps in Fig. 11 include loading the characters or phonemes of a word into an output data structure; therefore, another background process can, at appropriate times, check whether characters or phonemes can be provided from the output data structure and, if so, provide the characters or phonemes in a stream as output.

When the steps in Fig. 11 are initiated for a results data structure, the step in box 370 branches based on the number of recognition units that succeeded in matching the string. This could be based on the number of string identifiers received from the recognition units, or each recognition unit could simply provide a signal indicating whether or not it succeeded in matching the string.

If all of the results received indicate failure to match the string, the step in box 372 uses probabilities obtained from recognition unit 330 to determine the most probable characters or phonemes for the string being recognized. The step in box 372 can include comparing the resulting characters or phonemes with al ist of acceptable words and with a list of unacceptable words. It can also include considering more than one of the probable characters or phonemes for a given position, according to conventional techniques. Then the step in box 374 loads the resulting characters or phonemes into the output data structure in a position corresponding to the current string's position in the text.

If more than one recognition unit indicates successful matching of the string, the step in box 376 resolves the strings to obtain a single string. In the implementation of Fig. 10, this can be done by first obtaining the word set for each matched string, either from the recognition units that indicated success or by accessing string number/word data structure 350 with each matched string's number. Then, the word sets can be compared to determine whether the strings have the same word sets; if they do, the word set of any of the strings can be used. If the strings do not have the same word sets, the step in box 376 can then use all available information to resolve the strings. Based on data from recent words cache 352 indicating the part of speech of each recently recognized word and on part of speech rules 354, the step in box 376 can determine which parts of speech could properly fit into the current string's position in the text and can then select the result from the recognition unit corresponding to that part of speech; this procedure can be repeated as more and more of the surrounding strings are resolved until it produces resolution based on the current string's context. Similarly, data from recent words cache 352 indicating the language or specialized vocabulary of each recently recognized word can be used to select the result from the recognition unit corresponding to that language or specialized vocabulary. If the beginning or ending of a sentence can be identified, the step in box 376 can select the result from the recognition unit corresponding to words with the appropriate case for the current string's position within the sentence. Also, probabilities data from recognition unit 330 can be used to determine which string numbers have corresponding words that are most probable, which can also be taken into account.

When only one string was matched or when the step in box 376 provides a string as the result of resolution, the step in box 380 branches based on the number of words in the string's word set. As noted above, the word set could be retrieved from string number/word data structure 350 or could be received from the recognition units.

If the word set includes more than one word, the step in box 382 resolves the words to obtain a single word. The word can be chosen based on data from recent words cache 352 indicating how recently and how frequently words have occurred, with the word that occurs most frequently and most recently being selected. If this does not resolve the words, probabilities data from recognition unit 330 can be used to determine which word is most probable.

When the word set includes only one word, or when a resolved word is provided by the step in box 382, the step in box 384 loads the word into recent words cache 352 and also loads the characters or phonemes of the word into the output data structure in the current string's position. If the word is already in cache 352, the step in box 384 can update its data in the cache.

Finally, when the data concerning the current string has been loaded into the output data structure, the step in box 386 ensures that the recognition units advance to the next string received from candidate discriminator 322. If the steps in Fig. 11 can be initiated before all of the recognition units have provided their results for a given string, the step in box 386 may include checking whether characters or phonemes for all of the previous strings have been loaded into the output data structure and, if not, this step could be omitted. When this step is appropriate, it can be performed by controlling the processor in each recognition unit so that any processor that has not yet reached the next string stops its current operations and starts with the next string.

Figs. 12 and 13 illustrate operations results processor 320 could perform in response to interrupts like those shown in Fig. 11. Fig. 12 shows steps that handle an interrupt from candidate discriminator 322. Fig. 13 shows steps that handle an interrupt from one of the recognition units.

The steps in Fig. 12 begin upon receiving an interrupt from candidate discriminator 322, in box 410. This interrupt indicates that candidate discriminator 322 is providing data at its outlet for the recognition units. In response, results processor 320 sends an interrupt to the recognition units in box 412, in response to which each recognition unit retrieves the data provided by candidate discriminator 322 and includes it with previously received data defining the string currently being received. If the data indicate that the end of the string has been reached, each recognition unit can add the string to the queue of strings to be recognized and can prepare to receive a new string when candidate discriminator 322 again provides data. Upon successfully retrieving the data, the recognition unit can signal results processor 320 indicating success, in box 414, Then, results processor 320 can provide a release signal to candidate discriminator 322 in box 416, after which candidate discriminator 322 can continue its operations, providing further data at its outlet.

The steps in Fig. 13 begin upon receiving an interrupt from one of the recognition units, in box 430. This interrupt indicates that the recognition unit is ready to provide results on the results bus. In response, results processor 320 signals the recognition unit to provide its results in box 432; results processor 320 may wait to signal the recognition unit until one or more other recognition units finish providing their results. Then, in box 434, results processor 320 receives the results, which may be transmitted and received in a series of steps rather than as a single unit. Results processor 320 also loads the results into the appropriate results data structure; as mentioned above, a results data structure may be created for each string, and the results from each recognition unit may occupy a respective position in the results data structure. When the results are successfully received, results processor 320 provides a success signal to the recognition unit so that it can continue with its further operations, in box 436.

For some purposes, parallel recognition units as described above may provide rapid recognition. The use of a serial processor rather than parallel recognition units will now be discussed.

4. Serial Processor

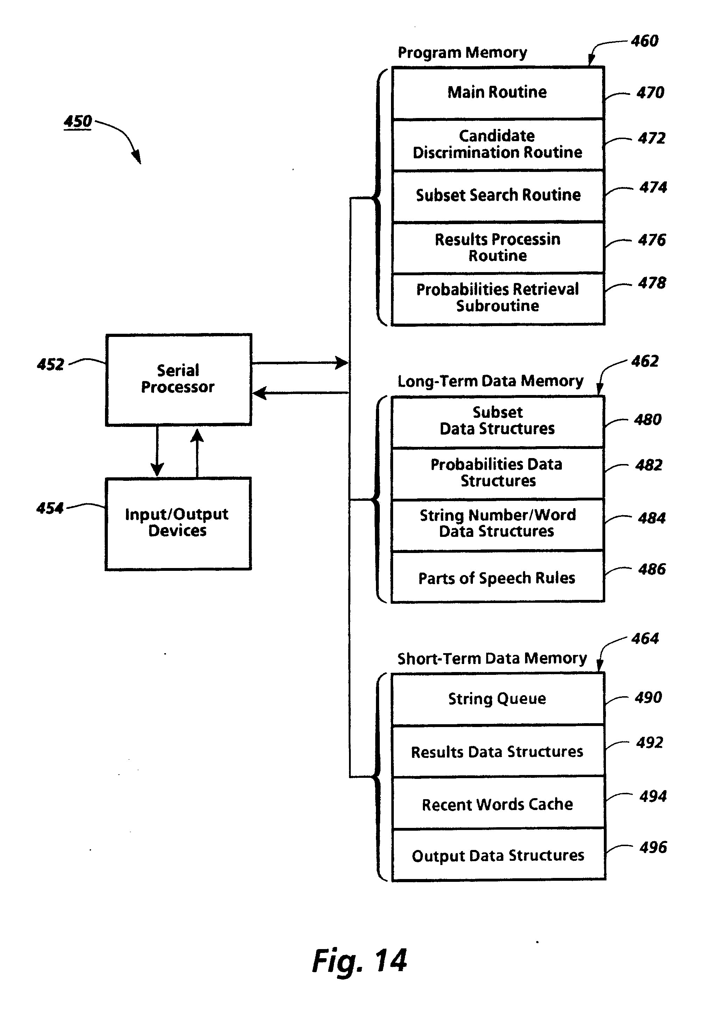

Despite the potential advantages of parallel recognition units, the use of a serial processor may be advantageous for prototyping and in other situations. Fig. 14 illustrates a system with a serial processor performing the functions of several of the processors in Fig. 10. System 450 in Fig. 14 includes serial processor 452, which is connected to input/output devices 454 to receive input signals and provide output signals. In addition, serial processor 452 is connected for accessing program memory 460, long-term data memory 462, and short-term data memory 464.

Program memory 460 includes main routine 470 which calls a number of other routines, some of which are illustrated in Fig. 14. Candidate discrimination routine 472 performs the function of candidate discriminator 322 in Fig. 10. Subset search routine 474 performs the function of search processor 342 in Fig. 10. Results processing routine 476 performs the function of results processor 320 in Fig. 10, and can call probabilities retrieval subroutine 478 to perform the function of processor 332 when appropriate.

Long-term data memory 462 includes a number of permanent data structures that are accessed by the routines in program memory 460, some of which are illustrated in Fig. 14. Subset data structures 480 correspond to the subset data structures in the recognition units in Fig. 10. Probabilities data structure 482 corresponds to data structure 334 in Fig. 10. String number/word data structure 484 corresponds to data structure 350, and part of speech rules 486 correspond to rules 354.

Short-term data memory 464 includes a number of data structures whose contents are accessed and modified by the routines in program memory 460, some of which are illustrated in Fig. 14. String queue 490 is a queue of candidate strings provided by candidate discriminator routine 472, and can be used if main routine 470 allows candidate discriminator routine 472 to proceed with its operations through multitasking even though other routines are not operating as rapidly; having a queue of strings may be useful if results processing routine 476 sometimes resolves a series of interdependent strings very rapidly as a group based on context rather than resolving each string separately. Results data structures 492 are data structures set up for each string before it is handled by results processing routine 476, and can be used if main routine 470 calls search routine 474 in parallel to operate on different strings through multitasking, with the search results for each string being loaded into a respective results data structure as they are obtained. Recent words cache 494 corresponds to cache 352 in Fig. 10, and can include data indicating the part of speech, language, vocabulary, case, and so forth for each word, as well as an indication of those words that occur in the sentence currently being recognized, to permit application of part of speech rules 486. Output data structure 496 is a data structure that queues the recognized characters or phonemes corresponding to each string in a respective position, and can be used if main routine 470 calls results processing routine 476 in parallel to operate on different strings through multitasking; the characters or phonemes corresponding to subsequent strings can be held in output data structure 496 until the corresponding characters or phonemes of all preceding strings have been obtained.

As noted above, main routine 470 can make use of multitasking or other similar techniques to obtain some parallelism. In general, main routine 470 can be optimized to attempt to approach the performance that could be obtained with parallel recognition units as in Fig. 10.

## D. Miscellaneous

The techniques of the invention provide an implementation of a constraint satisfier. As described above, techniques can be used in candidate discrimination, but the invention might also be useful with output from other candidate discrimination techniques, including, for example, output from a network for processing signals from a parallel arrangement of photosensors. The invention might also be useful with candidate discrimination techniques that match candidates in a text and assign an identifier to each group of matching candidates.

## Claims

1. A method of recognising a specified data string in a set of such strings comprising the step of: including data in a data structure indicating a set of strings of character candidate identifiers, each character candidate identifier indicating one of a set of machine discriminatable character candidate types, the step comprising including the data such that the data is accessible to determine whether a string of character candidate identifiers being recognized is one of the strings in the set indicated by the data.

2. The method of claim 1, further comprising obtaining the data indicating the set of strings of character candidate identifiers using a list of words.

3. The method of claim 2, in which a first word in the list of words includes a character, the set of character candidate identifiers including first and second character candidate identifiers indicating first and second character candidates that are likely to be the character, the step of obtaining the data indicating-the set of strings comprising obtaining first and second strings of character candidate identifiers, the first string including the first character candidate identifier and the second string including the second character candidate identifier.

4. The method of claim 2 in which the step of obtaining the data indicating the set of strings comprises obtaining all possible strings of character candidate identifiers of a given length and determining whether each of the possible strings has a high probability of being one of the words in the list of words.

5. The method of claim 1, further comprising obtaining preliminary data indicating, for each string in the set of strings, a word that the string is likely to be; the step of including the data in the data structure comprising including in the data structure a finite state transducer data structure based on the preliminary data; the finite state transducer data structure comprising data defining a set of states and a set of transitions, each transition originating in one of the states and terminating in one of the states; the data defining the states and transitions indicating the set of strings of character candidate identifiers and, for each string in the set, a respective string of character identifiers; the finite state transducer data structure being accessible to determine whether the string of character candidate identifiers being recognized is one of the set of strings.

6. The method of claim 1, further comprising modifying a preliminary set of character candidate types to obtain the set of machine discriminable character candidate types.

7. The method of claim 6 in which the modifying step comprises increasing the number of character candidate types in the preliminary set.

8. The method of claim 6 in which the modifying step comprises decreasing the number of character candidate types in the preliminary set.

9. A data structure comprising data indicating a set of strings of character candidate identifiers, each character candidate identifier indicating one of a set of machine discriminable character candidate types, the data in the data structure being accessible to determine whether a string of character candidate identifiers being recognized is one of the strings in the set indicated by the data.

10. The data structure of claim 9 in which each of the strings in the set is an acceptable string.

11. The data structure of claim 9, further comprising a finite state transducer data structure indicating, for each string in the set of strings, a word that the string is likely to be; the finite state transducer data structure comprising data defining a set of states and a set of transitions, each transition originating in one of the-states and terminating in one of the states; the data defining the states and transitions indicating the set of strings of character candidate identifiers and, for each string in the set, a respective string of character identifiers; the finite state transducer data structure being accessible to determine whether the string of character candidate identifiers being recognized is one of the set of strings.

12. The data structure of claim 11 in which the data defining one of the transitions comprises a data unit that includes a respective character candidate identifier and a respective character identifier.

13. A method of using the data structure of claim 12 comprising:

searching for the string being recognized, the searching step comprising:

accessing the data unit;

determining whether the respective character candidate identifier of the data unit matches one of the character candidate identifiers in the string being recognized; and

if the respective character candidate identifier matches, storing the respective character identifier of the data unit.

14. A method of using the finite state transducer data structure of claim 11 comprising:

accessing the data defining the states and transitions; and

determining whether the string being recognized is one of the strings in the set indicated by the data defining the states and transitions.

15. The method of claim 14 in which the data structure further includes, in addition to the data defining the states and transitions, respective data relating to one of the strings in the indicated set, the method further comprising, if the string being recognized is the one of the strings in the indicated set, accessing the respective data relating to the one of the strings.

16. A system comprising the finite state transducer data structure of claim 11, the system further comprising a processor for accessing the data defining the states and transitions and for determining whether the string being recognized is one of the strings in the set indicated by the data defining the states and transitions.

17. A system comprising the data structure of claim 9, the system further comprising a processor for accessing the data structure and for determining whether the string being recognized is one of the strings in the set indicated by the data.

18. The system of claim 17, further comprising a candidate discriminator for providing the string being recognized to the processor, the candidate discriminator providing the string based on a text.

19. The system of claim 18 in which each character candidate identifier is one of a set of cluster IDs, each of the cluster IDs indicating a respective cluster in character probability space, the candidate discriminator further being for segmenting the text into character candidates and for determining a nearest one of the respective clusters in character probability space for each character candidate, the candidate discriminator providing the cluster ID indicating the nearest cluster for each of the character candidates.

20. A system comprising:

a candidate discriminator for providing a string of character candidate identifiers to be recognized, each character candidate identifier indicating one of a set of machine discriminable character candidate types, the candidate discriminator providing the string to be recognized based on a text; and

a string recognizer for receiving the string to be recognized and for providing characters of a word that the string to be recognized is likely to be.

21. The system of claim 20 in which the string recognizer comprises a data structure that includes data indicating a set of strings of the character candidate identifiers, the data in the data structure being accessible to determine whether the string to be recognized is one of the strings in the set indicated by the data.

22. The system of claim 20 in which the string recognizer comprises a plurality of data structures, each data structure including respective data indicating a respective set of strings of the character candidate identifiers, the data in each of the data structures being accessible to determine whether the string to be recognized is one of the strings in the respective set.

23. The system of claim 21 in which each string in the respective set of strings of one of the data structures is likely to be a word having a respective word feature.

24. The system of claim 23 in which the respective word feature is a feature of part of speech.

25. The system of claim 23 in which the respective word feature is a feature of typeface.

26. The system of claim 20 in which the string recognizer comprises a plurality of recognition units, each receiving the string to be recognized from the candidate discriminator, each recognition unit being for determining whether the string to be recognized is one of the strings in a respective set of strings of the character candidate identifiers.

27. The system of claim 26 in which each recognition unit comprises a data structure including data indicating the respective set of strings of character candidate identifiers, the data in each data structure being accessible to determine whether the string to be recognized is one of the strings in the respective set indicated by the data.

28. The system of claim 27 in which the data in each data structure includes data relating to each string in the respective set.

29. The system of claim 26 in which each recognition unit is further for providing a preliminary string identifier indicating the string to be recognized if the string to be recognized is one of the strings in its respective set, the system further comprising a processor for receiving each preliminary string identifier provided by the recognition units and for using the preliminary string identifiers to obtain a resolved string identifier indicating the string to be recognized.

30. The system of claim 29 in which the processor is further for using the resolved string identifierto obtain a set of words that the string to be recognized is likely to be.

31. The method of claim 30 in which the processor is further for selecting one of the set of words and for providing character identifiers indicating character types of characters of the selected word.

32. The method of claim 26 in which each recognition unit is further for providing character identifiers indicating character types of characters of a word which the string to be recognized is likely to be if the string to be recognized is one of the strings in its respective set.

33. The system of claim 26 in which each of the strings in each of the respective sets is an acceptable string.

34. A finite state transducer data structure comprising data defining a set of states and a set of transitions, each transition originating in one of the states and terminating in one of the states; the data defining the states and transitions indicating a set of strings of phoneme candidate identifiers and, for each string in the set, a respective string of phoneme identifiers; each of the phoneme candidate identifiers indicating one of a set of machine discriminable phoneme candidate types; the data structure being accessible to determine whether a string of phoneme candidate identifiers being recognized is one of the indicated set of strings.

35. The data structure of claim 34 in which each of the strings in the indicated set of strings is an acceptable string.

36. The data structure of claim 34 in which the data defining one of the transitions comprises a data unit that includes a respective phoneme candidate identifier and a respective phoneme identifier.

37. A method of using the data structure of claim 36 comprising:

searching for the string being recognized, the searching step comprising:

accessing the data unit;

determining whether the respective phoneme candidate identifier of the data unit matches one of the phoneme candidate identifiers in the string being recognized; and

if the respective phoneme candidate identifier matches, storing the respective phoneme identifier of the data unit.

38. A method of using the finite state transducer data structure of claim 34 comprising:

accessing the data defining the states and transitions; and

determining whether the string being recognized is one of the strings in the set indicated by the data defining the states and transitions.

39. The method of claim 38 in which the data structure further includes, in addition to the data defining the states and transitions, respective data relating to one of the strings in the indicated set, the method further comprising, if the string being recognized is the one of the strings in the indicated set, accessing the respective data relating to the one of the strings.

40. A system comprising the finite state transducer data structure of claim 34, the system further comprising: a processor for accessing the data defining the states and transitions and for determining whether the string being recognized is one of the strings in the set indicated by the data defining the states and transitions.

41. A system comprising:

a candidate discriminator for providing a string of phoneme candidate identifiers to be recognized, each phoneme candidate identifier indicating one of a set of machine discriminable phoneme candidate types, the candidate discriminator obtaining the string to be recognized from a spoken word; and

a string recognizer for receiving the string to be recognized and for providing phonemes of a word that the string to be recognized is likely to be; the string recognizer comprising a plurality of recognition units, each receiving the string to be recognized from the candidate discriminator, each recognition unit being for determining whether the string to be recognized is one of the strings in a respective set of strings of the phoneme candidate identifiers.

42. The system of claim 41 in which one of the recognition units comprises a data structure including data indicating the respective set of strings of the phoneme candidate identifiers, the data being accessible to determine whether the string to be recognized is one of the strings in the respective set.

43. The system of claim 41 in which each string in the respective set of strings of one of the recognition units is likely to be a word having a respective word feature.

44. The system of claim 43 in which the respective word feature is a feature of part of speech.

45. The system of claim 41 in which each recognition unit is further for providing a preliminary string identifier indicating the string to be recognized if the string to be recognized is one of the strings in its respective set, the system further comprising a processor for receiving each preliminary string identifier provided by the recognition units and for using the preliminary string identifiers to obtain a resolved string identifier indicating the string to be recognized.

46. The system of claim 45 in which the processor is further for using the resolved string identifier to obtain a set of words that the string to be recognized is likely to be.

47. The system of claim 46 in which the processor is further for selecting one of the set of words and for providing phoneme identifiers indicating phoneme types of phonemes of the selected word.

48. The system of claim 41 in which each recognition unit is further for providing phoneme identifiers indicating phoneme types of phonemes of a word which the string to be recognized is likely to be if the string to be recognized is one of the strings in its respective set.

49. The system of claim 41 in which the candidate discriminator obtains the string to be recognized from an isolated spoken word.

**10** — savvy morning warning

**12** — C8-C1-C10-C11-EOW-C7-C5-C6-C4-C12-C2-EOW-C9-C9-C1-C4-C3-C5-C2

**14** — S10-S6-S11

**16** — W2-W1-W3

**18** — savvy morning warning

# Fig. 1

**Fig. 2a**

**Fig. 2b**

Fig. 3a

Receive Candidate ID String — 50

Current Node = S 0 — 52

Candidate IDs Remain? — 54

No → Acceptable String? — 70

Yes → Store Char String — 72

Yes → Take String's Next Candidate ID — 56

No → (from 70)

Pop Stack; Go to Loc with Previous Candidate ID — 68

Edges Remain? — 58

No → Stack empty? — 66

No → (Pop Stack; Go to Loc with Previous Candidate ID)

Yes → Match Next Edge? — 60

No → (back to Candidate IDs Remain / Current Node)

Yes → Load Char ID, Loc to Stack — 62

Current Node = Next Edge's Dest. — 64

Yes → Char Strings Stored? — 74

Yes → Return Stored Char Strings — 76

No → Return Failure — 78

**Fig. 3b**

23

```
                    ┌─────────────────┐
                    │  Receive List   │    80
                    │   Of Words      │
                    └────────┬────────┘
                             │
                             ▼
                    ┌─────────────────┐
                    │   Obtain All    │    82
                    │  Short Strings  │
                    └────────┬────────┘
                             │
                             ▼
                                          No
        ◇                    ◇                         ┌──────────────┐
     Short Strings   Yes  Is Next String    Yes        │  Add String  │
       Remain?           a Word?                        │   To List    │
        ◇                    ◇                          └──────────────┘
         84                    86                              88
         No
         ▼
        ◇                    ┌────────────────────────┐
      Words        Yes       │   Add Next Word's      │
      Remain?      ────────▶ │ Expanded Strings to List│
        ◇                    └────────────────────────┘
         90                            92
         No
         ▼
    ┌─────────────────┐
    │ Return List of  │
    │    Strings      │
    └─────────────────┘
           94
```

*Fig. 4*

24

Text/Speech
Data

100

Candidate
Discriminator — 102

Candidate IDs

String Recognizer

Recognitio
Unit

Processor — 112    110         120    Processor — 122

Subset
Data St.                           Subset
Data St.

— 114                              — 124

Results

130 — Results
Processor            Data
Structures — 132

104

Characters/Phonemes

**Fig. 5**

Receive Recognition
Units' Results — 140

142 — Select Candidate
String's Number

144 — Retrieve Corresponding
Words

Select Word, Provide
Characters/Phonemes — 146

**Fig. 6**

EP 0 425 291 A2

**From Box 84**

Obtain Equivalent
Trial Words — *160*

Trial Words
Remain? *162* — **Yes** → On Word List? *164* — **Yes** → Add Trial Word
To Word Set *166*

**No** (loop back)

**No**

Word Set? *170* — **No** → To Box 84

**Yes**

Add String, Word
Set To List *174*

**To Box 84**

*Fig. 7*

26

From Box 90

Take Next Word's
First Character — *180*

Candidate
Equivalents? — *182*

No → Previous
Character? — *190*

No → To Box 90

Yes (from Previous Character to top loop)

Yes ↓

Next Equivalent
To Stack — *184*

Next
Character? — *186*

Yes →

No ↓

Candidate String,
Word To List — *188*

*Fig. 8*

**Fig. 9**

Fig. 10

Fig. 11

```
┌─────────────────────────┐
│   Receive Candidate     │──── 410
│  Discriminator Interrupt │
└─────────────────────────┘
            │
            ▼
┌─────────────────────────┐
│  Interrupt Recognition Unit │──── 412
│ Processors To Retrieve Data │
└─────────────────────────┘
            │
            ▼
┌─────────────────────────┐
│   Receive Signals From   │──── 414
│ Recognition Unit Processors │
└─────────────────────────┘
            │
            ▼
┌─────────────────────────┐
│   Release Candidate     │──── 416
│     Discriminator       │
└─────────────────────────┘
```

*Fig. 12*

```
┌─────────────────────────┐
│   Receive Recognition   │──── 430
│     Unit Interrupt      │
└─────────────────────────┘
            │
            ▼
┌─────────────────────────┐
│  Signal Recognition Unit │──── 432
│    To Provide Results    │
└─────────────────────────┘
            │
            ▼
┌─────────────────────────┐
│   Receive Results; Load  │──── 434
│  Results Data Structure  │
└─────────────────────────┘
            │
            ▼
┌─────────────────────────┐
│     Signal Success      │──── 436
└─────────────────────────┘
```

*Fig. 13*

Program Memory ⟋ 460

| Main Routine | 470 |
| Candidate Discrimination Routine | 472 |
| Subset Search Routine | 474 |
| Results Processin Routine | 476 |
| Probabilities Retrieval Subroutine | 478 |

450

452 — Serial Processor

454 — Input/Output Devices

Long-Term Data Memory ⟋ 462

| Subset Data Structures | 480 |
| Probabilities Data Structures | 482 |
| String Number/Word Data Structures | 484 |
| Parts of Speech Rules | 486 |

Short-Term Data Memory ⟋ 464

| String Queue | 490 |
| Results Data Structures | 492 |
| Recent Words Cache | 494 |
| Output Data Structures | 496 |

*Fig. 14*